# EUROPEAN PATENT SPECIFICATION

(11) **EP 2 065 566 B1**
(45) Date of publication and mention of the grant of the patent: **26.01.2011**
(21) Application number: 08253835.6
(22) Date of filing: 28.11.2008
(51) Int. Cl.: F01D 11/12

(54) **Segmented ceramic layer for member of gas turbine engine**
Segmentierte keramische Schicht für ein Element eines Gasturbinenantriebs
Couche de céramique segmentée pour élément de moteur à turbine à gaz

(30) Priority: 28.11.2007 US 946114
(43) Date of publication of application: 03.06.2009
(73) Proprietor: United Technologies Corporation, Hartford, CT 06101 (US)
(72) Inventor: Tholen, Susan M., Kennebunk, Main 04043 (US); Strock, Christopher W., Kennebunk, Maine 04043 (US)
(74) Representative: Leckey, David Herbert

(56) References cited:
- EP-A- 1 283 278
- EP-A- 1 808 507
- EP-A- 1 844 863
- GB-A- 2 061 397
- US-A- 5 352 540

## Description

### BACKGROUND OF THE INVENTION

This disclosure relates to protective layers and methods of manufacturing protective layers having mechanical indentations for facilitating stress relief.

Components that are exposed to high temperatures, such as a component within a gas turbine engine, typically include protective coatings. For example, components such as turbine blades, turbine vanes, and blade outer air seals typically include one or more coating layers that function to protect the component from erosion, oxidation, corrosion or the like to thereby enhance component durability and maintain efficient operation of the engine. In particular, conventional outer air seals include an abradable ceramic coating that contacts tips of the turbine blades such that the blades abrade the coating upon operation of the engine. The abrasion between the outer air seal and the blade tips provides a minimum clearance between these components such that gas flow around the tips of the blades is reduced to thereby maintain engine efficiency.

One drawback of the abradable type of coating is its vulnerability to erosion and spalling, For example, spalling may occur as a loss of portions of the coating that detach from the outer air seal. Loss of the coating increases clearance between the outer air seal and the blade tips, and is detrimental to turbine efficiency. One cause of spalling is the elevated temperature within the turbine section, which causes sintering of a surface layer of the coating. The sintering causes the coating to shrink, which produces stresses between the coating and a substrate of the outer air seal. If the stresses are great enough, the coating may delaminate and detach from the substrate.

A prior art seal of a gas turbine regenerator is shown in US-5352540.

### SUMMARY OF THE INVENTION

There is provided, according to the present invention, a turbine seal member as claimed in claim 1 and a method as claimed in claim 9.

The disclosed turbine seal member and methods are for facilitating reduction of internal stresses in a ceramic layer of the turbine seal member.

The turbine seal member includes a turbine seal substrate having a gas-path side and a ceramic layer disposed on the gas path side. The ceramic layer includes a plurality of mechanical indentations for facilitating reduction of internal stresses.

In some examples, each mechanical indentation is pyramid-shaped and tapers from a surface of the ceramic layer to an apex. The ceramic layer may be compacted near the apexes to a greater density than a remaining portion of the ceramic layer.

The method of controlling internal stresses of a ceramic layer of the turbine seal member includes mechanically indenting the ceramic layer to form a plurality of mechanical indentations. The mechanical indentations provide preexisting locations for releasing energy associated with internal stresses of the ceramic layer.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows.
Figure 1 illustrates an example gas turbine engine.
Figure 2 illustrates selected portions of a turbine section of the gas turbine engine.
Figure 3 illustrates an example portion of a seal member in the turbine section.
Figure 4 illustrates a pattern of mechanical indentations of a ceramic layer of the seal member.
Figure 5 illustrates an example method for forming the mechanical indentations.
Figure 6 illustrates the example method for forming the mechanical indentations.
Figure 7 illustrates another example pattern of mechanical indentations of a ceramic layer.

### DETAILED DESCRIPTION OF THE PREFERRED EMBODIMENT

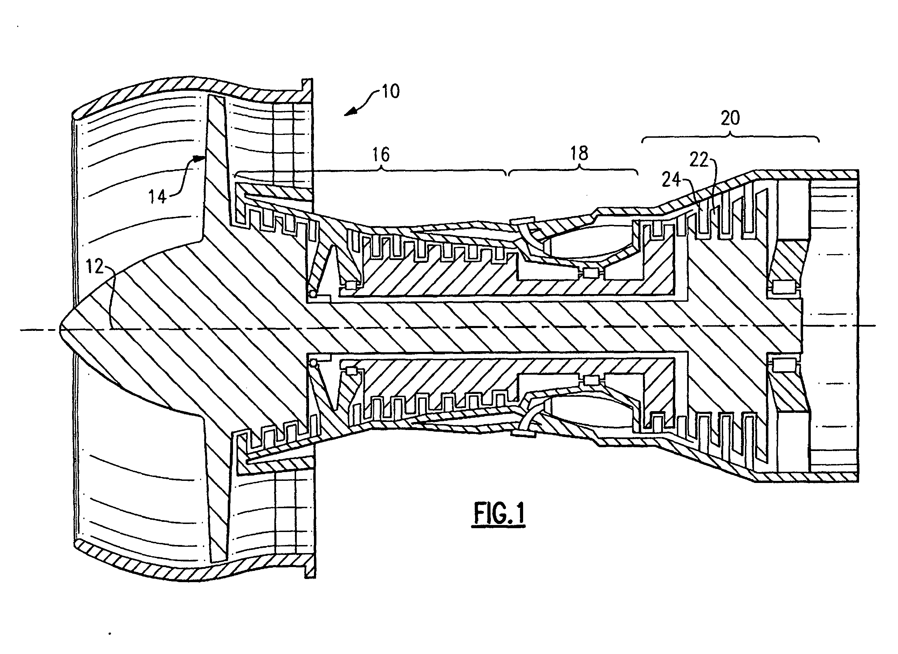

Figure 1 illustrates selected portions of an example gas turbine engine 10, such as a gas turbine engine 10 used for propulsion. In this example, the gas turbine engine 10 is circumferentially disposed about an engine centerline 12. The engine 10 includes a fan 14, a compressor section 16, a combustion section 18 and a turbine section 20 that includes turbine blades 22 and turbine vanes 24. As is known, air compressed in the compressor section 16 is mixed with fuel that is burned in the combustion section 18 to produce hot gases that are expanded in the turbine section 20. Figure 1 is a somewhat schematic presentation for illustrative purposes only and is not a limitation on the disclosed examples. Additionally, there are various types of gas turbine engines, many of which could benefit from the examples disclosed herein, which are not limited to the design shown.

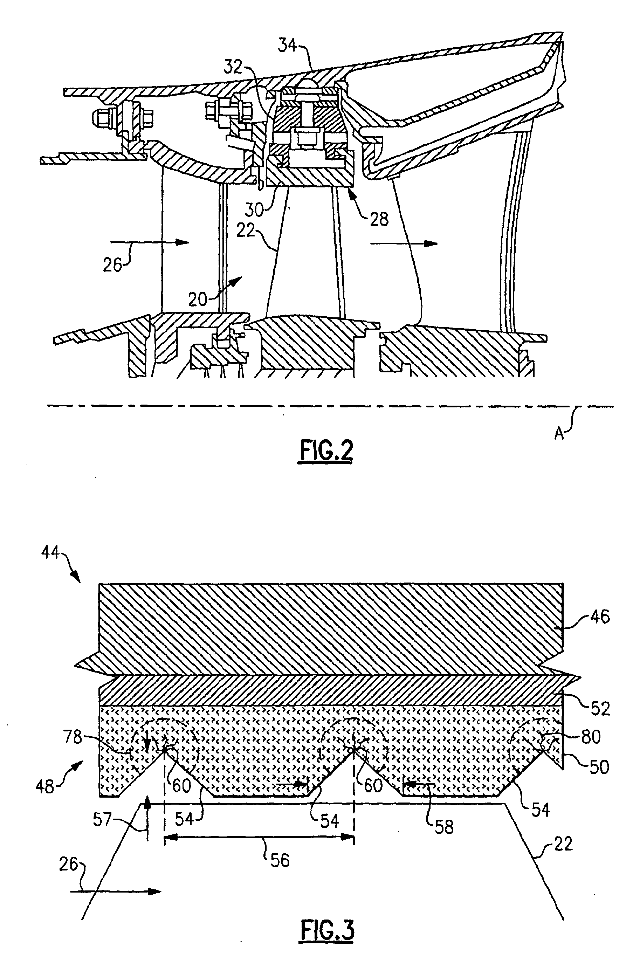

Figure 2 illustrates selected portions of the turbine section 20. The turbine blade 22 receives a hot gas flow 26 from the combustion section 18 (Figure 1). The turbine section 20 includes a blade outer air seal system 28 having a seal member 30 that functions as an outer wall for the hot gas flow 26 through the turbine section 20. The seal member 30 is secured to a support 32, which is in turn secured to a case 34 that generally surrounds the turbine section 20. For example, a plurality of the seal members 30 are circumferentially located about the turbine section 20.

Figure 3 illustrates an example portion 44 of the seal member 30. In this example, the seal member 30 includes a substrate 46 having a coating system 48 disposed on the side of the seal member 30 that is exposed to the hot gas flow 26. The coating system 48 includes a ceramic layer 50, such as an abradable ceramic coating (e.g., zirconia), and a bond layer 52 between the ceramic layer 50 and the substrate 46. For example, the bond layer 52 includes a nickel alloy, platinum, gold, silver, or MCrAlY, where the M includes at least one of nickel, cobalt, iron, or a combination thereof, Cr is chromium, Al is aluminum and Y is yttrium. Although a particular coating system 48 is shown, it is to be understood that the disclosed examples are not limited to the illustrated configuration and may include bond layers having a plurality of layers, no bond layer at all, or multiple ceramic layers. Furthermore, although the disclosed example is for the seal member 30, it is to be understood that the examples herein may also be applied to other types of engine or non-engine components and coating types.

The ceramic layer 50 is segmented by mechanical indentations 54 that extend partially through a thickness of the ceramic layer 50. The mechanical indentations 54 function to reduce internal stresses within the ceramic layer 50 that occur from sintering of the ceramic layer 50 at relatively high service temperatures within the turbine section 20 during use in the gas turbine engine 10. For example, service temperatures of about 2,500°F (1,370°C) and higher cause sintering near the exposed surfaced of the ceramic layer 50. The sintering may result in partial melting, densification, and diffusional shrinkage of the ceramic layer 50 and thereby induce internal stresses within the ceramic layer 50. If not relieved, the internal stresses may cause delamination cracking within the ceramic layer 50 or between the ceramic layer 50 and the bond layer 52. The mechanical indentations 54 provide preexisting locations for releasing energy associated with the internal stresses (e.g., reducing shear and radial stresses). That is, the energy associated with the internal stresses is dissipated through cracking in the thickness direction of the ceramic layer 50 that initiates from the mechanical indentations 54, such as from the apexes 60. Thus, by facilitating cracking in the thickness direction, which does not cause delamination, the mechanical indentations 54 reduce the amount of energy that is available for delamination cracking between the ceramic layer 50 and the bond layer 52.

The mechanical indentations 54 can be characterized as having an average indentation spacing 56, an average indentation depth 57, an average indentation span 58, and an indentation density including the number of the mechanical indentations 54 per unit surface area of the ceramic layer 50. For example, the characteristics may be determined or estimated in any suitable manner, such as by using microscopy techniques.

The mechanical indentations 54 may be formed with any suitable indentation density, which corresponds to the average indentation spacing 56. In some examples, the indentation density corresponds to an average indentation spacing 56 that is about equal to the thickness of the ceramic layer 50, which facilitates producing an indentation density that is greater than a cracking density that would naturally occur from sintering cracking during service. An indentation density that is greater than a cracking density that would naturally occur from sintering cracking provides the benefit of a greater degree of stress relief than would naturally occur. For example, the indentation density is about 10-200 indentations per inch (per 25.4 mm), which corresponds to an average indentation spacing 56 of about 0.100-0.005 inches (2.541-0.38 mm). In another embodiment, the indentation density is about 6.67 indentations per inch (per 25.4 mm). In another embodiment, the indentation density is about 200 indentations per inch (per 25.4 mm). The term "about" as used in this description relative to geometries, distances, temperatures, or the like refers to possible variation in the given value, such as normally accepted variations or tolerances in the art.

The mechanical indentations 54 may also be formed with any suitable average indentation span 58. In some examples, the average indentation span 58 is about equivalent to the average indentation depth 57. For example, the average indentation span is about 0.005-0.015 inches (0.127-0.381 mm). As can be appreciated, the average indentation span 58 may alternatively be greater than or less than the average indentation depth 57, depending on the needs of a particular application, on the properties of the ceramic layer 50, the amount of force used to form the mechanical indentations 54, the shape of the mechanical indentations 54, and the like, for example.

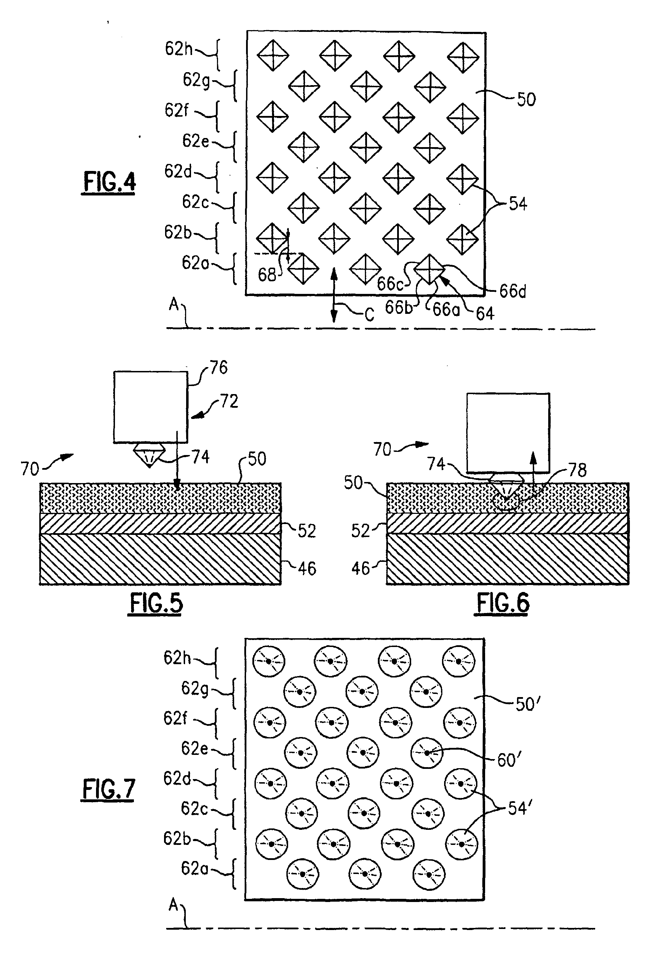

Referring also to Figure 4, the mechanical indentations 54 may be formed with any suitable shape and with any suitable pattern on the ceramic layer 50. For example, the mechanical indentations 54 are symmetrical pyramid-shaped indentations such that each mechanical indentation 54 tapers from the surface of the ceramic layer 50 to an apex 60. The symmetry facilitates equal cracking through the thickness direction of the ceramic layer 50 extending from each corner of the indentation. When the indentations 54 are aligned in rows parallel to the diagonal across the mechanical indentations 54, cracks may bridge between mechanical indentations 54. Depending on the indentation spacing 56, coating thickness and properties and the characteristics of the mechanical indentations 54, the cracks may completely form at the time of indentation, initiate but not propagate completely, or the mechanical indentations 54 may form stress concentration sites or local regions of additive residual stress, all of which can result in the desired stress relief during service.

The mechanical indentations 54 may be formed in any suitable pattern on the ceramic layer 50. For example, the mechanical indentations are formed in rows 62ah that extend approximately parallel to the engine centerline 12. Each of the rows 62a-h is axially offset from its neighboring rows. For example, 62c is axially offset from rows 62b and 62d such that the mechanical indentations 54 of row 62c are not aligned in a circumferential direction, C, with the mechanical indentations 54 of rows 62b and 62d. Thus, the mechanical indentations 54 are in a staggered pattern, which facilitates a more meandering crack pattern through ceramic layer 50 rather than cracks that bridge between mechanical indentations 54 in order to prevent a grid like segmentation structure that may be more prone to sequential spallation from edges.

Additionally, each of the mechanical indentations 54 may be formed in any suitable orientation relative to the engine centerline axis A, or alternatively to the sides of the seal member 30. For example, each mechanical indentation 54 includes a mouth 64 having sides 66a, 66b, 66c, and 66d. In the illustrated example, the sides 66a, 66b, 66c, and 66d are oriented at about a 45° angle 68 to the engine centerline axis A. For example, orienting the mechanical indentations 54 at the angle 68 may facilitate a random cracking pattern or residual stresses that lead to a random crack pattern that forms in directions that are perpendicular to the sintering stresses in service, as opposed to forming in a pattern dictated by the indentation pattern.

Figures 5 and 6 illustrate an example method 70 of manufacturing an article having the ceramic layer 50, such as the seal member 30, with the mechanical indentations 54. In this example, a mechanical indenter 72 is used to form the mechanical indentations 54. For example, the mechanical indenter 72 includes an indenter member 74 mounted to a base 76. The indenter member 74 may be made of a hard material, such as diamond, that is suitable for mechanically indenting the ceramic layer 50. For example, the indenter member 74 is harder than the ceramic layer 50, such that the indenter member 74 is not significantly damaged in forming the mechanical indentations 54.

The indenter member 74 is moved into the ceramic layer 50 (Figure 5) with a force that is suitable to form the mechanical indentation 54. Upon removal of the indenter member 74 from the ceramic layer 50 (Figure 6), the mechanical indentation 54 remains. For example, the indenter member 74 may be moved manually, or moved using an automated or semi-automated machine.

In the indenting process, the indenter member 74 compacts a portion of the ceramic layer 50 to thereby form a compacted ceramic region 78 near each apex 60. That is, the ceramic material within the compacted ceramic region 76 is compacted to a density that is greater than the remaining portion of the ceramic layer 50 (e.g., portions outside of the compacted ceramic regions 78). Thus, the process of forming the mechanical indentations 54 does not remove any ceramic material from the ceramic layer 50 and thereby facilitates preserving the thermal barrier properties of the ceramic layer 50. During indentation, the compaction occurs in regions of compressive stress, while along the ridges of the indenter and at the apex 60 tensile stresses are generated. The tensile stresses may or may not cause crack formation at the time of indentation. Additionally, upon removal of the indentation load, there is further development of the local stress field as a result of the deformation and compaction caused by indentation. The residual stresses may also cause crack formation or propagation immediately following indentation, or may act as an additive component to the sintering shrinkage stresses during service.

Additionally, the force of compacting the ceramic material of the ceramic layer 50 may cause microcracks 80 near the apexes 60. The microcracks 80 generally extend in the thickness direction and radially outward from the indentation corners in the ceramic layer 50 and may function as initiation locations for sintering cracking in the thickness direction.

Alternatively, the indenter member 74 may have any shape that is suitable for forming mechanical indentations 54 with other desired shapes, such as conical. Figure 7 illustrates another example ceramic layer 50' that may be used in the coating system 48 of the seal member 30 in place of the ceramic layer 50, where like reference numerals represent like features. In this example, the ceramic layer 50' includes conical-shaped mechanical indentation 54' that each taper from the surface of the ceramic layer 50' to an apex 60' and have only one continuous side wall rather than distinct side walls as for the pyramid shape. For example, a conically shaped indenter member 74 may be used to produce small cracks at the apexes 60' and leave residual stresses with the benefit of a more random crack pattern that forms more in the directions perpendicular to the sintering stresses in service as opposed to forming in a pattern dictated by the indentation pattern.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A turbine seal member (30) for use in a gas turbine engine, comprising:
a turbine seal substrate (46) having a gas-path side; **characterized by**
a ceramic layer (50; 50') disposed on the gas-path side of the turbine seal substrate (46), the ceramic layer (50; 50') having a plurality of mechanical indentations (54; 54'), that form at least one of:
(i) microcracks (80) extending from each of the mechanical indentations (54;54'); and
(ii) a compacted ceramic stress region (78) adjacent an apex (60;60') of each of said plurality of mechanical indentations (54;54'), wherein each of the plurality of mechanical indentations (54;54') tapers from a surface of the ceramic layer (50;50') to said apex (60;60'),

2. The turbine seal member as recited in claim 1, wherein each of the plurality of mechanical indentations (54; 54') is symmetrical.

3. The turbine seal member as recited in claim 1 or 2, wherein each of the plurality of mechanical indentations (54) is pyramid shaped.

4. The turbine seal member as recited in claim 3, wherein each of the plurality of mechanical indentations (54) includes a mouth at a surface of the ceramic layer (50), the mouth having sides (66) that are oriented at about 45° relative to a central axis (A) of a gas turbine engine.

5. The turbine seal member as recited in claim 1 or 2, wherein each of the plurality of mechanical indentations is conical shaped.

6. The turbine seal member as recited in any preceding claim, wherein the plurality of mechanical indentations (54; 54') includes a first row (62a) of mechanical indentations (54; 54') and a second row (62b) of mechanical indentations (54; 54') that is axially offset from the first row (62a) of mechanical indentations (54; 54') relative to a central axis (A) of a gas turbine engine.

7. The turbine seal member as recited in any preceding claim, wherein the ceramic layer comprises an indentation density of about 200 mechanical indentations per inch (per 2.54 cm), or of about 6.67 mechanical indentations per inch (per 2.54 cm), or of about 10-200 mechanical indentations per inch (per 2.54 cm).

8. The turbine seal member as recited in any preceding claim, further comprising a bond layer between the ceramic layer and the turbine seal substrate.

9. A method of controlling internal stresses of a ceramic layer (50; 50') of a turbine seal member (30) comprising:
mechanically indenting the ceramic layer (50; 50'), by moving an indenter member (74) into said ceramic layer (50;50'), to form a plurality of mechanical indentations (54; 54') for altering the internal stresses to form stress relief cracks.

10. The method as recited in claim 9, further comprising forming the plurality of mechanical indentations (54; 54') with a diamond (74).

11. The method as recited in claim 9 or 10, further comprising compacting regions (78) of the ceramic layer (50; 50') adjacent apexes (60; 60') of the plurality of mechanical indentations (54; 54').

12. The method as recited in claim 9, 10 or 11, further comprising forming microcracks (80) adjacent the plurality of mechanical indentations (54; 54').

## Patentansprüche

1. Turbinendichtungselement (30) zur Verwendung in einer Gasturbinenmaschine, umfassend:
einen Turbinendichtungsträger (46), der eine Gaswegseite aufweist;
**gekennzeichnet durch**
eine Keramikschicht (50; 50'), die an der Gaswegseite des Turbinendichtungsträgers (46) angeordnet ist, wobei die Keramikschicht (50; 50') eine Mehrzahl von mechanischen Einkerbungen (54, 54') aufweist, die zumindest eines ausbilden aus:
(i) Mikrorissen (80), die sich von jeder der mechanischen Einkerbungen (54; 54') erstrecken; und
(ii) einem verdichteten keramischen Spannungsbereich (78), der benachbart einer Spitze (60; 60') einer jeden der Mehrzahl von mechanischen Einkerbungen (54; 54') angeordnet ist, wobei jede der Mehrzahl von mechanischen Einkerbungen (54; 54') von einer Fläche der keramischen Schicht (50; 50') zu der Spitze (60; 60') zuläuft.

2. Turbinendichtungselement nach Anspruch 1, wobei jede der Mehrzahl von mechanischen Einkerbungen (54; 54') symmetrisch ist.

3. Turbinendichtungselement nach Anspruch 1 oder 2, wobei jede der Mehrzahl von mechanischen Einkerbungen (54) pyramidenförmig ausgebildet ist.

4. Turbinendichtungselement nach Anspruch 3, wobei jede der Mehrzahl von mechanischen Einkerbungen (54) eine Mündung an einer Fläche der keramischen Schicht (50) beinhaltet, wobei die Mündung Seiten (66) aufweist, die etwa 45° relativ zu einer Mittelachse (a) einer Gasturbinenmaschine ausgerichtet sind.

5. Turbinendichtungselement nach Anspruch 1 oder 2, wobei jede der Mehrzahl von mechanischen Einkerbungen konisch ausgebildet ist.

6. Turbinendichtungselement nach einem der vorangehenden Ansprüche, wobei die Mehrzahl von mechanischen Einkerbungen (54; 54') eine erste Reihe (62a) von mechanischen Einkerbungen (54; 54') und eine zweite Reihe (62b) von mechanischen Einkerbungen (54; 54') beinhaltet, die axial von der ersten Reihe (62a) von mechanischen Einkerbungen (54; 54') relativ zu einer Mittelachse (A) einer Gasturbinenmaschine abgesetzt sind.

7. Turbinendichtungselement nach einem der vorangehenden Ansprüche, wobei die Keramikschicht eine Einkerbungsdichte von etwa 200 mechanischen Einkerbungen per Inch (per 2,54 cm), oder etwa 6,67 mechanischen Einkerbungen per Inch (per 2,54 cm), oder etwa 10 bis 200 mechanischen Einkerbungen per Inch (per 2,54 cm) umfasst.

8. Turbinendichtungselement nach einem der vorangehenden Ansprüche, des Weiteren umfassend eine Bindungsschicht zwischen der Keramikschicht und dem Turbinendichtungsträger.

9. Verfahren zur Steuerung/Regelung interner Spannungen einer Keramikschicht (50; 50') eines Turbinendichtungselements (30) umfassend:
mechanisches Einkerben der Keramikschicht (50; 50') durch Bewegen eines Einkerbungselements (54) in die Keramikschicht (50; 50'), um eine Mehrzahl von mechanischen Einkerbungen (54; 54') auszubilden, zur Änderung der internen Spannungen, um Spannungsentlastungsrisse auszubilden.

10. Verfahren nach Anspruch 9, des Weiteren umfassend Ausbilden der Mehrzahl von mechanischen Einkerbungen (54; 54') mit einem Diamanten (74).

11. Verfahren nach Anspruch 9 oder 10, des Weiteren umfassend Verdichtungsbereiche (78) der Keramikschicht (50; 50') benachbart zu Spitzen (60; 60') der Mehrzahl von mechanischen Einkerbungen (54; 54').

12. Verfahren nach Anspruch 9, 10 oder 11, des Weiteren umfassend Ausbilden von Mikrorissen (80) benachbart zu der Mehrzahl von mechanischen Einkerbungen (54; 54').

## Revendications

1. Elément de joint de turbine (30) à utiliser dans un moteur à turbine à gaz, comprenant:
un substrat de joint de turbine (46) présentant un côté de passage de gaz;
**caractérisé par** :
une couche de céramique (50; 50') qui est disposée sur le côté de passage de gaz du substrat de joint de turbine (46), la couche de céramique (50; 50') comportant une pluralité d'indentations mécaniques (54; 54') qui forment au moins soit :
(i) des micro-fissures (80) qui s'étendent à partir de chacune des indentations mécaniques (54; 54'); soit
(ii) une zone de contraintes de céramique compactée (78) à proximité d'un sommet (60; 60') de chacune de ladite pluralité d'indentations mécaniques (54; 54'), dans lequel chacune de la pluralité d'indentations mécaniques (54; 54') s'amincit à partir d'une surface de la couche de céramique (50; 50') vers ledit sommet (60; 60').

2. Elément de joint de turbine selon la revendication 1, dans lequel chacune de la pluralité d'indentations mécaniques (54; 54') est symétrique.

3. Elément de joint de turbine selon la revendication 1 ou 2, dans lequel chacune de la pluralité d'indentations mécaniques (54; 54') est de forme pyramidale.

4. Elément de joint de turbine selon la revendication 3, dans lequel chacune de la pluralité d'indentations mécaniques (54) comporte une ouverture à une surface de la couche de céramique (50), l'ouverture présentant des côtés (66) qui sont orientés à environ 45° par rapport à un axe central (A) d'un moteur à turbine à gaz.

5. Elément de joint de turbine selon la revendication 1 ou 2, dans lequel chacune de la pluralité d'indentations mécaniques est de forme conique.

6. Elément de joint de turbine selon l'une quelconque des revendications précédentes, dans lequel chacune de la pluralité d'indentations mécaniques (54; 54') comprend une première rangée (62a) d'indentations mécaniques (54; 54'), et une deuxième rangée (62b) d'indentations mécaniques (54; 54') qui est axialement décalée par rapport à la première rangée (62a) d'indentations mécaniques (54; 54') par rapport à un axe central (A) d'un moteur à turbine à gaz.

7. Elément de joint de turbine selon l'une quelconque des revendications précédentes, dans lequel la couche de céramique présente une densité d'indentations d'environ 200 indentations mécaniques par pouce (= par 2,54 cm), ou d'environ 6,67 indentations mécaniques par pouce (= par 2,54 cm), ou d'environ 10 à 200 indentations mécaniques par pouce (= par 2,54 cm).

8. Elément de joint de turbine selon l'une quelconque des revendications précédentes, comprenant en outre une couche de liaison entre la couche de céramique et le substrat de joint de turbine.

9. Procédé pour commander les contraintes internes d'une couche de céramique (50, 50') d'un élément de joint de turbine (30), comprenant l'étape suivante:
indenter de façon mécanique la couche de céramique (50; 50'), en déplaçant un élément d'indentation (74) dans ladite couche de céramique (50; 50'), de manière à former une pluralité d'indentations mécaniques (54; 54') pour altérer les contraintes internes en vue de former des fissures de détente de contraintes.

10. Procédé selon la revendication 9, comprenant en outre la formation de la pluralité d'indentations mécaniques (54; 54') en utilisant un diamant (74).

11. Procédé selon la revendication 9 ou 10, comprenant en outre le compactage de zones (78) de la couche de céramique (50; 50') à proximité de sommets (60; 60') de la pluralité d'indentations mécaniques (54; 54').

12. Procédé selon la revendication 9, 10 ou 11, comprenant en outre la formation de micro-fissures (80) à proximité de la pluralité d'indentations mécaniques (54; 54').
